(19) Europäisches Patentamt
European Patent Office
Office européen des brevets

(11) **EP 1 779 382 B1**

(12) **EUROPEAN PATENT SPECIFICATION**

(45) Date of publication and mention
of the grant of the patent:
**24.02.2010 Bulletin 2010/08**

(21) Application number: **05780819.8**

(22) Date of filing: **04.08.2005**

(51) Int Cl.:
*G11B 7/00* (2006.01)    *G11B 7/125* (2006.01)

(86) International application number:
**PCT/IB2005/052601**

(87) International publication number:
**WO 2006/018770 (23.02.2006 Gazette 2006/08)**

(54) **METHOD AND APPARATUS FOR DETERMINING OPTICAL DISC RECORDING PARAMETERS**

VERFAHREN UND VORRICHTUNG ZUR BESTIMMUNG DER AUFZEICHNUNGSPARAMETER VON OPTISCHEN PLATTEN

PROCEDE ET DISPOSITIF DE DETERMINATION DE PARAMETRES D'ENREGISTREMENT DE DISQUE OPTIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.08.2004   CN 200410057886**

(43) Date of publication of application:
**02.05.2007   Bulletin 2007/18**

(73) Proprietor: **Koninklijke Philips Electronics N.V.
5621 BA Eindhoven (NL)**

(72) Inventors:
• **TAO, Jing**
**Philips Electronics China**
**Shanghai 200070 (CN)**
• **TANG, Fulong**
**Philips Electronics China**
**Shanghai 200070 (CN)**
• **ZHONG, Jianyi**
**Philips Electronics China**
**Shanghai 200070 (CN)**

(74) Representative: **Uittenbogaard, Frank
Philips
Intellectual Property & Standards
P.O. Box 220
5600 AE Eindhoven (NL)**

(56) References cited:
EP-A- 1 059 630          WO-A-2005/114661
US-A1- 2002 176 338     US-A1- 2004 246 864
US-B1- 6 243 339

## Description

### FIELD OF THE INVENTION

The present invention relates to the field of optical storage, and more particularly to a method and apparatus for determining optimum parameters for recording optical discs.

### BACKGROUND OF THE INVENTION

Since recordable optical discs came into the market, the technologies for recording optical discs have undergone a rapid development from CD-R, CD-RW, DVD±R and DVD±RW, and now to the Blue-ray recordable optical discs. Accordingly, the optical recording speed has developed from low speed to high speeds. Now, the optical disc recording apparatus for recording CD 16X speed, 24X speed, and even with higher time speed (e.g.52X speed) are available on the market, and the optical disc recording apparatus for recording DVD with 16X speed are also available on the market.

Recording discs should be performed under certain record strategy. A record strategy includes various parameters for controlling the optical disc recording process, for example, Pw (Record Power), Pe (Erase Power) and C (cooling gap) etc. Generally, relevant recording parameters are pre-stored on the optical discs for recording available from the market, for example, in the recordable CDs, the ATIP (Absolute Time In Pregroove) information generally includes pre-stored disc recording parameters, and in the recordable DVDs, the ADIP (Absolute Address In Pregroove) information includes pre-stored recording parameters. Most of these recording parameters can meet the demand for disc recording quality. Generally, the optical disc recording apparatus will perform OPC (Optimum Power Control) based on the recording parameters stored on the optical discs, to determine an appropriate recording power.

However, not all recordable discs have consistent quality, and not all recordable discs have pre-stored recording parameters. With different media and manufacturing process used, the recordable discs on market are thread and thrum, and the recording characteristics thereof are significantly different. Many recording strategies stored on the optical discs haven't been authenticated, or even there is no record strategy pre-stored on the optical discs, and some discs have authenticated recording strategy parameters, yet the parameters are not in accordance with the recording characteristics of disc recording apparatus.

If a recording apparatus could not accommodate the various discs, the manufacture of the recording apparatus will lose quite a part of the market. Therefore, some manufactures pre-store all available record strategies relevant to the various recordable discs. Even so, because new discs emerge in endlessly, a disc recording apparatus is impossible to deal with all situations. Some disc recording apparatus determine discs' recording parameters by large amount of test recording before recording the optical discs, so more time and more test space are required. However, the space for test recording in a disc is very limited, and users don't want to wait long before proceeding with formal recording.

Therefore, there need to provide a method for determining parameters for recording in discs, so that the optical disc recording apparatus can determine recording parameters that meet the demand of recording quality rapidly based on the optical disc characteristics.

US2002/0176338 describes a recording method. Jitter is reduced for variable linear recording velocities. Also for the radial location (disk radius) of recording (inner periphery and outer periphery) a correction coefficient is determined. The document describes optimizing the jitter for a number of individual parameters. Each parameter is optimized in a subsequent test writing process.

### SUMMARY OF THE INVENTION

An object of the invention is to provide a method and apparatus for determining parameters for disc recording so as to overcome the above mentioned problems exist in the prior art.

According to one embodiment of the present invention, there is provided a method for determining parameters for disc recording as defined in claim 1.

According to another embodiment of the present invention, there is provided an apparatus for determining parameters for disc recording as defined in claim 14.

The present invention further provides an embodiment of the apparatus comprising: a disc driving means for driving an optical disc to be written.

With the method and apparatus of the present invention, when a disc has no recording parameters pre-stored thereon, or when the pre-stored recording parameters can't result in satisfied quality, the optical disc recording apparatus can determine the parameters having important impact on the optical disc recording quality, and more preferably, a plurality of parameters with specific relevancy there between can be determined in less time and less disc space.

The other objects and advantages of the present invention will be apparent in light of the following detailed description and claims with reference to the accompanying drawings, and the present invention can be fully understood.

## BRIEF DESCRIPTION OF THE DRAWINGS

An embodiment of the present invention will be described in detail with reference to the accompanying drawings.

Fig.1 is a flowchart illustrating a method for determining parameters for disc recording in accordance with an embodiment of the present invention;

Fig.2 is a schematic diagram of the value of Pw and Pe in a predetermined central composite design scheme;

Fig.3 is a schematic diagram illustrating the performance of re-recording directly CD-RW disc 1 for multi times with the optimum disc recording parameters determined according to the present invention.

Fig.4 is a schematic diagram of the optical disc recording strategy used by the DVD+R disc that can be written only once.

Fig.5 is a block diagram of the apparatus 600 for determining parameters for disc recording in accordance with an embodiment of the present invention.

In the above accompanying drawings, like reference numbers identify identical, similar or corresponding characteristics or functions.

## BEST MODE FOR CARRYING OUT THE INVENTION

According to the present invention, if the recording parameters satisfying recording quality can't be obtained from a disc to be written, the optical disc recording apparatus will determine the relevant parameters for recording the optical disc. In the process of determining the recording parameters, the optical disc recording apparatus will consider multiple recording parameters with specific relevancy therebetween, and their common impact on the recording quality, so that the value of the parameters that satisfying quality demand can be obtained in less time and limited test space on the optical disc.

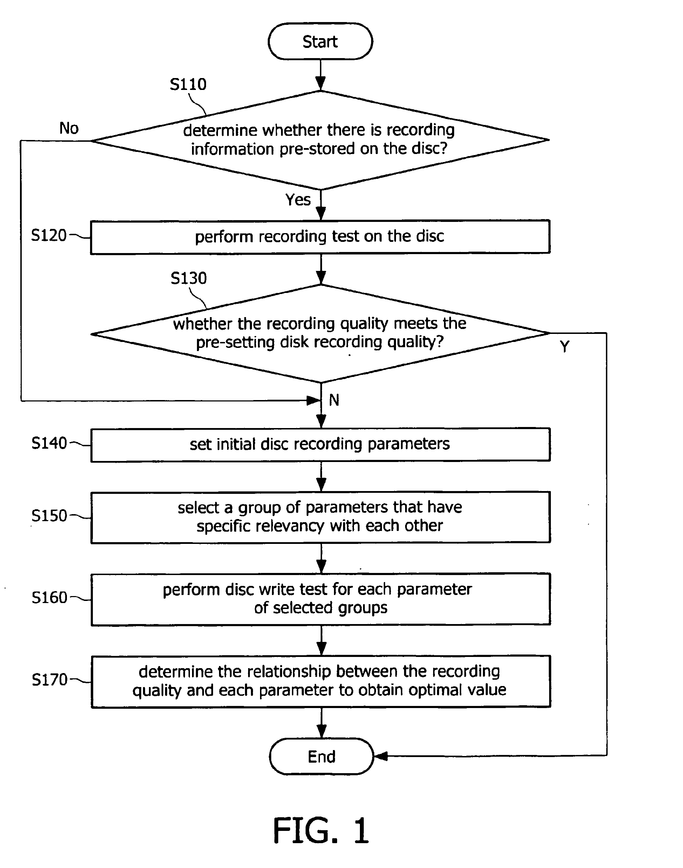

Fig.1 is a flowchart of a method for determining parameters for disc recording in accordance with an embodiment of the present invention. When a disc to be written is inserted, the optical disc recording apparatus will determine the type of the optical disc to be written, and search the recording information on the optical disc (step S110). The type information of the optical disc and the pre-stored disc recording parameter information can generally be obtained in the ATIP (for the recordable CD discs) or ADIP (for the recordable DVD discs).

If the pre-stored recording parameters is searched out, the optical disc recording apparatus will perform recording test on the optical disc to be written based on the searched out recording parameters (step S120). Generally, this test is performed with Optimal Power Control (OPC) procedure, and only one record power parameter (Pw) is tested and optimised in a set range of value. The method for estimating the quality of disc recording includes reading out the signal written on the optical disc firstly, and then judge the recording quality based on the data-to-clock Jitter of the read signal. The larger the Jitter, the worse the optical disc recording quality, or vice versa.

Then, it is determined whether the recording quality satisfy the pre-set disk recording quality based on the test result (step 130). If the jitter of the test is larger than a reference value, the pre-stored parameters do not satisfy the pre-set disk recording quality.

If the pre-stored disc recording parameters do not satisfy pre-set disk recording quality, or no recording parameter is searched out on the optical disc, the optical disc recording apparatus will set initial recording parameters for the optical disc to be written (step 140). Initial disc recording parameters can be set by the manufacture of the optical disc recording apparatus based on the optical disc type and the recording speed of the optical disc recording apparatus. Generally, different type of recordable discs and different disc recording speed fit for different disc recording strategy, namely, correspond to different disc recording parameters. For example, recording a CD RW disc with a recording speed from 16 times speed to 32 times speed needs 2T disc recording strategy, while recording a CD-RW disc with the recording speed under 10 times speed only needs 1T recording strategy.

If there is no recording information pre-stored on the optical disc, the initial disc recording parameters to be set should include all necessary parameters under the relevant disc recording strategy. If there are recording parameters pre-stored on the optical disc, but the parameters do not satisfy the recording quality, the initial disc recording parameters to be set can include only uncommon parameters, and keep the common parameters for use. Of course, the optical disc recording parameters pre-stored can be given up, and a whole group of disc recording parameters be set based on the type of the recordable disc and the recording speed of the optical disc recording apparatus. While setting initial disc recording parameters, it also needs to determine the value range for uncommon parameters. For example, the initial value of record power (Pw) may be 38mW, and the value range may be from 35mW to 47mW, etc.

Then, a group of parameters with specific relevancy there between are selected from the initial recording parameters to optimise (Step S150). Some recording parameters have significant impact on the optical disc recording quality, e.g. Pw and Pe of CD-RW disc recording, Pw and dPw of DVD+R disc recording, etc. These parameters usually have close relevancy with each other and commonly affect the recording quality. For CD-RW disc, cooling gaps of even marks (Ce) and cooling gaps of odd marks (Co) are also a group of important disc recording parameters having close relevancy with each other. For DVD+R disc, $T_{top}$ (the time that it spends to record in the beginning segment of signs from 4T to 14T with higher power) and $T_{lp}$ (the time that it spends to record in the end segment of signs from 4T to 14T with higher power) are also a group of important disc recording parameters having close relevancy with each other.

The optical disc recording apparatus will perform test recording according to predetermined test scheme for each parameter of selected sets of parameters in the predetermined range of parameters value (step S160). Optimising the parameters with specific relevancy can consider various relevant parameters' impact on the optical disc quality. The test for a group of selected parameters is performed under the condition that other parameters remaining unchanged, so that the selected group of parameter's impact on the disk recording quality is highlighted.

A better test scheme is to adopt Design of Experiment (DOE) approach for disc recording test. For example, a test scheme designed according to Central Composite Design (CCD) of DOE can get better test result with limited test times. CCD takes into account the parameters' major impact, each parameter's inter-influence, and parameter's quadratic composition. Its test observation value can be used to fit a response camber, so of higher efficiency.

Finally, according to test result of step S160, the relationship between the recording quality and each parameter in the selected set is determined to obtain the value for each parameter in the selected set for disk recording. Many experiments show that there exists certain function relationship between many recording parameters and the jitter indicating recording quality. According to the test result of step S160, the function relationship can be fit out, thereby obtaining the value corresponding to the selected parameters with lowest jitter in the corresponding range of parameters.

In step S 150, multiple sets of inter-relevant parameters with important impact on the recording quality can be chosen. For example, besides Pw and Pe, parameters Ce and Co can be chosen for phase variant disc. In this case, after optimising parameter sets Pw and Pe, parameter sets Ce and Co can be optimised according to steps S160 and S 170. Through choosing and optimising multiple sets of parameters, the optical disc recording quality can be further improved.

The reason for determining parameter set Pw and Pe prior to determining parameter set Ce and Co is that parameter set Pw and Pe have more impact on disc recording quality than parameter set Ce and Co. Determining the optimised disc recording parameter in this order corresponds to coarse tuning the optical disc recording parameters firstly, then fine tuning. Similarly, for a oneX recordable disc, such as DVD+R, parameter set Pw and dPw and parameter set $T_{top}$ and $T_{lp}$ can be chosen to be optimised successively.

The method for optimising disc recording parameters according to the present invention can determine optimum disc recording parameters in shorter time and with less test space. These finally determined parameters for disc recording can be written in the optical disc to be used later, or be stored in disc recording apparatus corresponding to the optical disc identification information (e.g. ID of an optical disc).

Now the present invention will be described with the process of determining parameters of re-recordable optical disc CD-RW as an example. Many experiments show that under certain recording speed, 4 parameters have significant influence on the recording quality of a CD-RW disc: record power Pw, Erase power Pe, Cooling gaps of even marks Ce, and Cooling gaps of odd marks Co, wherein Pw and Pe have close relevancy, Ce and Co have close relevancy. Therefore, these four parameters can be chosen and split into two sets for test. Because Pw and Pe are the most critical recording parameters, they are optimised firstly for coarse tuning the optical disc recording strategy parameters, then parameter sets Ce and Co are optimised for finer tuning.

When recording a CD-RW, there exists quadratic relationship between jitter and parameter set (Pw and Pe), which can be expressed in equation (1).

$$Jitter = C + \sum_{i=1}^{2} B_i x_i + \sum_{i=1}^{2} \sum_{j=1}^{2} A_{ij} x_i x_j \tag{1}$$

Wherein:

C is a constant (namely coefficient of zero order term);
i is the number of parameters, in this case, i=1,2;
j is the number of parameters, in this case, j=1,2;
$B_i$ is coefficient of first order term;
$X_i$ and $X_j$ are the chosen optimised parameters for test, which are Pe and Pw in this case;
And $A_{ij}$ is the coefficient of quadratic term, wherein $A_{12}=A_{21}$, also assume $A_{1-2}=2A_{12}=2A_{21}$.

According to equation (1), if the values for each coefficient can be determined, the quadratic relationship among jitter and the corresponding recording parameters can be fitted.

To determine the coefficients in equation (1), a test scheme for chosen recording parameters is designed according to the method of DOE. Using CCD (central composite design) experiment in DOE can obtain perfect value in the set range of parameters with finite times of test. For example, for a group of two parameters, only 9 experiments are needed to obtain better parameter value through processing the test result. The value range of each parameter can be predetermined based on the optical disc type and recording speed. For example, Pw may range from 35mw to 47mw, and Ce from 2.89ns to 8.96ns, etc.

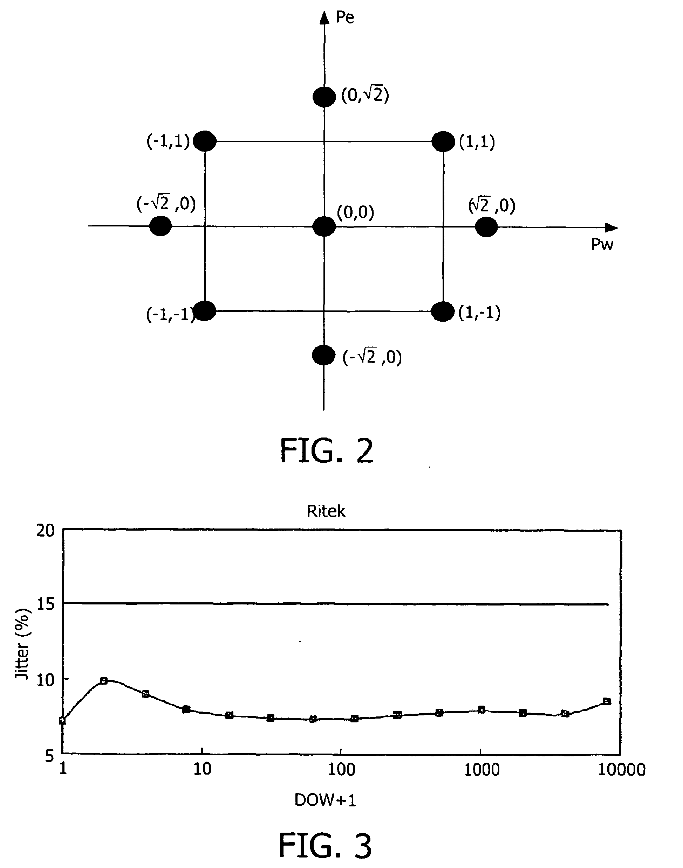

Fig.2 is a schematic diagram illustrating the value of Pw and Pe in the predetermined CCD test scheme, wherein the values 1, -1, $\sqrt{2}$, $-\sqrt{2}$, and 0 are obtained after normalizing the endPoint value of parameters Pw and Pe's value range. According to CCD test design, the relationship between Pe/Pw and the jitter can be fitted with 9 times of recording test for values of parameter Pe and Pw corresponding to the 9 points in Fig.2.

As denoted in table 1, in the 9 disc recording tests for Pw and Pe, Pw and Pe are valued as:

Table 1: test value of Pw and Pe

| Pw | 0 | $-\sqrt{2}$ | $\sqrt{2}$ | 1 | 0 | 0 | -1 | -1 | 1 |
|---|---|---|---|---|---|---|---|---|---|
| Pe | $-\sqrt{2}$ | 0 | 0 | 1 | 0 | $\sqrt{2}$ | 1 | -1 | -1 |

With each group of parameters Pw and Pe, a corresponding jitter value can be obtained in the recording test. The jitter values obtained in the 9 tests can be denoted as equation (2), namely matrix Y:

$$Y = \begin{bmatrix} jitter1 \\ jitter2 \\ jitter3 \\ jitter4 \\ jitter5 \\ jitter6 \\ jitter7 \\ jitter8 \\ jitter9 \end{bmatrix} \tag{2}$$

According to the result of above disc recording tests and following equation (3), coefficients C, $B_1$, $B_2$, $A_{11}$, $A_{22}$, and $A_{1-2}$ in equation (1) can be calculated.

$$Coeff = \left( X^T \cdot X \right)^{-1} \cdot X^T \cdot Y \tag{3}$$

Wherein:

Coeff represents a column matrix composed of coefficients C, $B_1$, $B_2$, $A_{11}$, $A_{12}$, $A_{21}$, $A_{22}$.

$$X = \begin{bmatrix} 1 & 0 & -1.414 & 0 & 2 & 0 \\ 1 & -1.414 & 0 & 2 & 0 & 0 \\ 1 & 1.414 & 0 & 2 & 0 & 0 \\ 1 & 1 & 1 & 1 & 1 & 1 \\ 1 & 0 & 0 & 0 & 0 & 0 \\ 1 & 0 & 1.414 & 0 & 2 & 0 \\ 1 & -1 & 1 & 1 & 1 & -1 \\ 1 & -1 & -1 & 1 & 1 & 1 \\ 1 & 1 & -1 & 1 & 1 & -1 \end{bmatrix}; \qquad (4)$$

T denotes matrix transpose operation.

After each coefficient in equation (1) is obtained, the relationship between the jitter and the parameters Pw and Pe can be denoted by equation (1). According to equation (1), the values of Pw and Pe corresponding to minimum jitter can be determined by following equation (5)

$$P = -\frac{1}{2} A^{-1} \cdot B \qquad (5)$$

wherein, P is the matrix of finally obtained Pe and Pw values, A is the matrix of coefficients $A_{ij}$, B is column matrix composed of coefficients $B_i$.

As above described, according to the CCD method, with 9 recording tests, and processing the test results according to equations (1) to (5), the function relationship between the recording power Pw, Erase power Pe, and jitter can be obtained. With this function relationship, the values of Pw and Pe corresponding to minimum jitter can be obtained, and be for disc recording.

In practice, the 9 recording tests for Pw and Pe can be repeated once more so that the jitter values obtained with same parameters can be averaged to decrease interference. Similar quadratic relationship exists between the parameters Ce, Co and jitter, and with the same method, parameters Ce and Co can be determined.

The optimising order of different parameter sets should be determined based on their influence on the optical disc recording quality. Relatively important parameter sets should be optimised firstly, then the other sets.

Two parameters in one set is preferred. In this way, only 9 tests are needed in the CCD test scheme, thereby reducing the test work loading. If there are 3 or more parameters in one set, it is also feasible. But in this case, with a test design performed according to CCD, test works will increase greatly to obtain a good result, such as, 27 tests are needed to obtain required result for a set comprising 3 parameters.

Now the effects of present invention will be illustrated by determining recording parameters for 3 CD-RW discs with the method of the present invention. The recording parameters will be determined firstly according to the method of the present invention, then the optical disc recording quality with the determined parameters and that with pre-stored recording parameters will be compared. The pre-stored recording parameters in the 3 CD-RW discs are authenticated, and perfectly satisfy the recording quality.

The recording speed of the optical disc recording apparatus used in the experiment is 16 times speed, the chosen parameter sets are first parameter group of Pw and Pe, and the second parameter group of Co and Ce, respectively. Each parameter's value range is listed in table 2, wherein, the value range of Pe can be obtained based on Pe/Pw.

Table 2: the range of the value of Pe, Pw, Ce and Co

| Parameters | Pw(mW) | Pe/Pw | Ce(ns) | Co(ns) |
|---|---|---|---|---|
| Maximum | 35 | 0.14 | 2.89 | 2.89 |
| Minimum | 47 | 0.3 | 8.69 | 10.12 |

Disc recording tests are performed for the first parameter set (Pw and Pe) and the second parameter set (Ce and Co) of discs 1, 2, 3 respectively according to the CCD method of DOE. The test results are listed in table 3.

Table 3: the comparison of the optical disc recording quality

| Disc for experiment | Pw (mW) | Pe/P w | Ce (nS) | Co (nS) | jitter (%) | |
| --- | --- | --- | --- | --- | --- | --- |
| | | | | | Recording result with parameters according to the present invention | Recording result with prestored authenticated recording parameter |
| Disc 1 | 41.3 | 0.23 | 5.04 | 6.33 | 8.97 | 8.92 |
| Disc 2 | 42.7 | 0.17 | 4.92 | 6.35 | 9.44 | 9.39 |
| Disc 3 | 40.5 | 0.233 | 5.01 | 6.30 | 8.82 | 8.71 |

From table 3, it can be seen that the recording quality using recording parameters determined with the method of the present invention substantially emulate the recording quality using the authenticated recording parameters.

Fig.3 is a schematic diagram illustrating the performance of directly re-recording CD-RW disc 1 for multiple times with the optimum disc recording parameters determined according to the present invention. As shown in Fig.3, the requirement for disc recording quality is that jitter value is not more than 15%. From Fig.3, the optical disc recording parameters determined according to the present invention meet the requirement in the multiple repeated erasing/recording processes and are relatively stable.

The tests for Discs 2 and 3 have substantially consistent results with disc 1.

The following description takes determining recording parameters for recordable DVD-R as an example. For a DVD-R disc, parameter sets critical for recording quality include parameter set Pw and dPw, and parameter set $T_{top}$ and $T_{lp}$, etc.

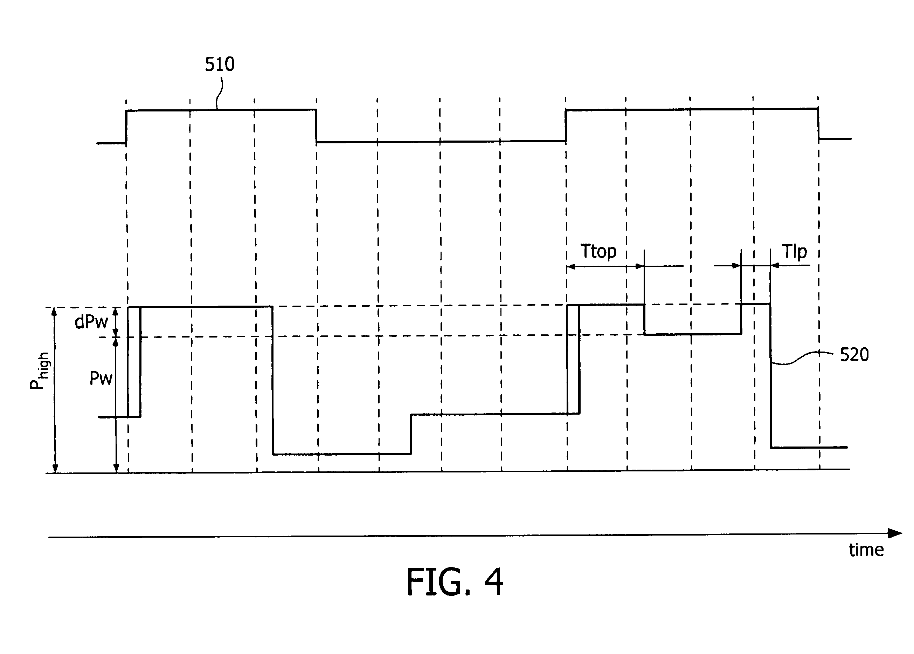

Fig.4 is a schematic diagram illustrating the optical disc recording strategy used by the once recordable DVD+R disc. In Fig.4, the curve 510 denotes the data to be written to the DVD+R, the curve 520 denotes the recording strategy for recording data to the DVD+R, Pw is the required power for recording data from 4T to 14T, and dPw is the power increment for recording data 3T and the marked start segment and end segment of data from 4T to 14T. Parameters Pw and dPw have significant influence on the recording quality of the DVD+R, and there is closer relevancy between the two parameters, so they should be optimised simultaneously.

When the recording parameters satisfying recording quality can't be obtained from a DVD+R to be written, the optical disc recording apparatus will set initial recording parameters for the DVD+R according to the optical disc type and recording speed.

According to the method of the present invention, parameters Pw and dPw are selected as parameters in the chosen set to be optimised. This parameter set can be denoted as $P_{high}$ (=Pw + dPw) and dP (=dPw/Pw), etc.

The jitter responds to parameters $P_{high}$ and dP with a quadratic function relationship similar to equation (1). Other steps for determining $P_{high}$ and dP can be performed according to steps in above embodiment for determining the optical disc recording parameters Pw and Pe for CD-RW. The difference is that the parameter values in the CCD test scheme are as depicted in table 4, these values can also obtain good results.

Table 4: the test value of the parameters of dP and $P_{high}$

| dP | 0 | 0 | -0.5 | 1 | 0.5 | -1 | 0 | -0.5 | 0.5 |
| --- | --- | --- | --- | --- | --- | --- | --- | --- | --- |
| Phigh | -1 | 0 | 0.5 | 0 | -0.5 | 0 | 1 | -0.5 | 0.5 |

Correspondingly, matrix X in this example can be denoted as equation (6):

$$X = \begin{bmatrix} 1 & 0 & -1 & 0 & 1 & 0 \\ 1 & 0 & 0 & 0 & 0 & 0 \\ 1 & -0.5 & 0.5 & 0.25 & 0.25 & -0.25 \\ 1 & 1 & 0 & 1 & 0 & 0 \\ 1 & 0.5 & -0.5 & 0.25 & 0.25 & -0.25 \\ 1 & -1 & 0 & 1 & 0 & 0 \\ 1 & 0 & 1 & 0 & 1 & 0 \\ 1 & -0.5 & -0.5 & 0.25 & 0.25 & 0.25 \\ 1 & 0.5 & 0.5 & 0.25 & 0.25 & 0.25 \end{bmatrix} \tag{6}$$

Through above process, recording parameters that satisfying recording quality of DVD+R can be obtained. Among the DVD+R recording parameters, parameter set $T_{top}$ and $T_{lp}$ are also significant parameters, and can be optimised after dP and $P_{high}$ have got relatively desirable values according the method.

Now the effect of the present invention will be further illustrated by determining recording parameters $P_{high}$, dP, $T_{top}$, and $T_{lp}$ for a DVD+R disc. The other disc recording strategy parameters are set to default value.

When the recording speed is 6 time speed, the value range of parameters $P_{high}$ and dP and the finally determined parameter values $P_{high}$ and dP, as well as jitter value obtained according to the determined parameter values are listed in table 5.

Table 5: optimised $P_{high}$ and dP in case of 6 times speed

| Parameter and value range | | Optimised parameter value determined by drawn out function | | Jitter value obtained when optimised parameter values are used in disc recording. |
|---|---|---|---|---|
| Phigh (mW) | dP | Phigh (mW) | dP | |
| [27, 36] | [0.35,0.65] | 31 | 0.396 | 9.5% |

Then based on the $P_{high}$ and dP under 6 times speed, the values of $T_{top}$ and $T_{lp}$ are determined. The result is listed in Table 6:

Table 6: optimised $T_{top}$ and $T_{lp}$ in case of 6 times speed

| Parameter and value range | | Optimized parameter value determined by fit function | | Jitter value when performing disc recording with optimized parameter values |
|---|---|---|---|---|
| Ttop (ns) | Tlp (ns) | Ttop (ns) | Tlp (ns) | |
| [6, 7.5] | [2.9, 4.5] | 7.1 | 3.6 | 9.2% |

When the recording speed is 8 times, the value range of parameters $P_{high}$ and dP, finally determined parameter values, and jitter value obtained according to the determined parameter values are listed in table 7.

Table 7: optimised $P_{high}$ and dP in case of 8 times speed

| Parameter and value range | | Optimized parameter value determined according to fit function | | Jitter value obtained when recording disc with optimised parameter values |
|---|---|---|---|---|
| Phigh (mW) | dP | Phigh (mW) | dP | |
| [32, 40] | [0.35,0.55 ] | 36 | 0.384 | 9.4% |

Then according to the determined $P_{high}$ and dP in Table.7 under 8 times speed, the values of $T_{top}$ and $T_{lp}$ are determined. The result is listed in Table 8:

Table 8: optimised $T_{top}$ and $T_{lp}$ in case of 8 times speed

| Parameter and value range | | Optimised parameter value determined by fit function | | Jitter value obtained when optimised parameter values are used in disc recording. |
|---|---|---|---|---|
| Ttop (ns) | Tlp (ns) | Ttop (ns) | Tlp (ns) | |
| [4.4, 6] | [2.4, 3.6] | 5.6 | 3.1 | 9.2% |

From the above embodiment, it can be seen that the parameters determined according to the method of the present invention can finely satisfy the optical disc recording quality.

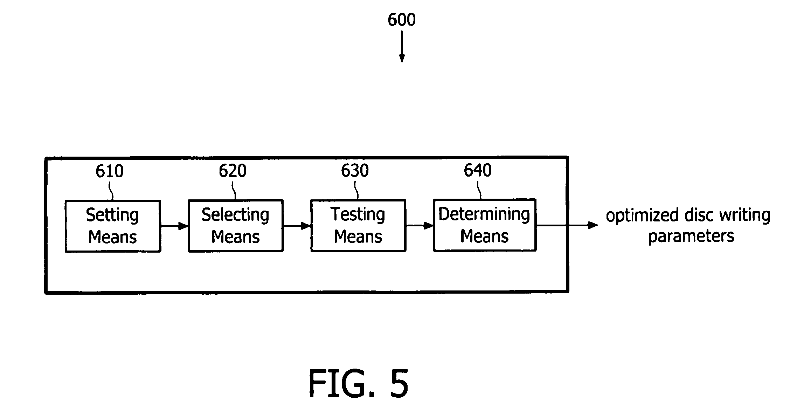

Fig.5 is a block diagram of the apparatus 600 for determining parameters for disc recording in accordance with an embodiment of the present invention. The apparatus 600 comprises a setting means 610 for setting initial recording parameters according to the optical disc type and disc recording speed. The apparatus 600 may also comprise a selecting means 620 for selecting a group of parameters from the initial recording parameters, in which set the parameters having specific relevancy there between and common influence on disc recording quality. If parameter sets that need optimisation are preset, selecting means 620 can be ignored.

The apparatus 600 further comprises a testing means 630 for performing disc recording test for the selected group of parameters within a pre-set value range according to a pre-set test scheme. The pre-set test scheme can be a disc recording test scheme designed according to the CCD method in DOE.

The apparatus 600 further comprises a determining means 640 for determining the relationship between each parameter within a group of parameters and the optical disc recording quality according to the recording test result to obtain the optimised parameter value for each of the group of parameters.

The optical disc recording parameters determined by the apparatus 600 can be stored on the optical disc, or stored in the optical disc recording apparatus corresponding to each optical disc.

While the present invention has been described with reference to the exemplary embodiment, many substitutions, modifications and alternatives will be apparent to those skilled in the art, therefore all these substitutions, modifications and alternatives are all fall within the scope of this invention as defined in the appended claims.

**Claims**

1. A method for determining parameters for recording an optical disc, comprising the steps of:

    (a) setting initial values of record strategy parameters for recording the optical disc;
    **characterized in that** the method comprises
    selecting a group of the parameters, the parameters in the group having specific relevancy among each other and commonly affecting the recording quality;
    (b) performing recording test with the group of the parameters according to a predetermined test scheme having a predetermined range of parameter values for each parameter of the selected group under the condition that other parameters remain unchanged; and
    (c) fitting a function relationship between each parameter in the group and recording quality of the optical disc according to result of the test, and
    obtaining, via the function relationship, a corresponding optimal parameter value for each parameter in the group.

2. The method of claim 1, further comprising the steps of:

    (d) selecting another group of parameters from the parameters, the parameters of the another group having specific relevancy among each other and commonly affecting the recording quality, the another group of parameters having less influence on recording quality than the group of parameters tested in the step (b);
    (e) performing disc recording test with the parameters in the another group according to another predetermined test scheme having a predetermined range of parameter values for each parameter of the another group under the condition that other parameters remain unchanged; and
    (f) fitting a further function relationship between each parameter in the another group and recording quality of the optical disc according to result of the test, and
    obtaining, via the further function relationship, obtaining a corresponding optimal parameter value for each parameter in the another group.

3. The method of claim 2, wherein the optical disc recording test performed in step (e) uses the corresponding parameters obtained in step (c).

4. The method of claim 1, wherein the step (a) sets initial values of record strategy parameters according to type of the optical disc.

5. The method of claims 1 or 4, wherein the step (a) sets initial values of record strategy parameters according to speed of disc recording.

6. The method of claims 1 or 2, wherein the optical disc recording test is performed based on a predetermined value range of each parameter in the group of parameters and a predetermined test scheme, wherein the predetermined test scheme determines a predetermined number of test times.

7. The method of claim 6, wherein the predetermined test scheme includes the test scheme of center combination design experiment method.

8. The method of claim 1, wherein the group of parameters includes the optical disc recording power parameters.

9. The method of claims 1 or 8, wherein the group of parameters includes the parameters of Pe (erase power).

10. The method of claims 1 or 8, wherein the group of parameters includes the parameters of dPw (power increment).

11. The method of claims 1, 2 or 8, wherein the group of parameters includes the parameters of Ce (cooling gaps of even marks) and Co (cooling gaps of odd marks).

12. The method of claims 1, 2 or 8, wherein the group of parameters includes Ttop (the time that spends on recording in beginning segment of marks from 4T to 14T) and Tlp (the time that spends on recording in end segment of marks from 4T to 14T).

13. The method of claims 1 or 2, wherein the optical disc recording test in step (b) and step (e) is performed simultaneously with the parameters in each corresponding group.

14. An apparatus (600) for determining parameters for disc recording, comprising:

> setting means (610) for setting initial values of record strategy parameters for recording the optical disc;
> **characterized in that** the device comprises selecting means (620) for
> selecting a group of the parameters, the parameters in the group having specific relevancy among each other and commonly affecting the recording quality, testing means (630) for
> performing recording test with the group of the parameters according to a predetermined test scheme having a predetermined range of parameter values for each parameter of the selected group under the condition that other parameters remain unchanged; and
> fitting means (640) for fitting a function relationship between each parameter in the group and recording quality of the optical disc according to result of the test, and obtaining, via the function relationship, a corresponding optimal parameter value for each parameter in the group.

15. The apparatus of claim 14, wherein the setting means sets initial values of record strategy parameters according to type of the optical disc and speed of disc recording.

16. The apparatus of claim 14, wherein the optical disc recording test is performed based on a predetermined value range of each parameter in the group of parameters and a predetermined test scheme, wherein the predetermined test scheme determines a predetermined number of test times.

17. The apparatus of claim 16, wherein the predetermined test scheme includes the test scheme of center combination design experiment method.

18. The apparatus of any of the claims 14-17 comprising:

> disc driving means for driving a disc to be written.

**Patentansprüche**

1. Verfahren zum Bestimmen von Parametern zum Aufzeichnen einer optischen Platte, wobei dieses Verfahren die nachfolgenden Verfahrensschritte umfasst:

   (a) das Einstellen von Anfangswerten von Parametern in Bezug auf die Aufzeichnungsstrategie zum Aufzeichnen der optischen Platte,
   **dadurch gekennzeichnet, dass** das Verfahren die nachfolgenden Verfahrensschritte umfasst - das Selektieren einer Gruppe der Parameter, wobei die Parameter in der Gruppe eine bestimmte Relevanz unter einander haben und gemeinsam die Aufzeichnungsqualität beeinflussen;
   (b) das Durchführen eines Aufzeichnungstests mit der Gruppe der Parameter entsprechend einem vorbestimmten Testschema mit einem vorbestimmten Bereich von Parameterwerten für jeden Parameter der selektierten Gruppe unter der Bedingung, dass andere Parameter nicht geändert werden; und
   (c) das Schaffen einer Funktionsbeziehung zwischen jedem Parameter in der Gruppe und der Aufzeichnungsqualität der optischen Platte entsprechend dem Testergebnis, und - das Erhalten eines entsprechenden optimalen Parameterwertes für jeden Parameter in der Gruppe, und zwar über die Funktionsbeziehung.

2. Verfahren nach Anspruch 1, wobei dieses Verfahren weiterhin die nachfolgenden Verfahrensschritte umfasst:

   (d) das Selektieren einer anderen Gruppe von Parametern aus den Parametern, wobei die Parameter der anderen Gruppe eine bestimmte Relevanz unter einander haben und gemeinsam die Aufzeichnungsqualität beeinflussen, wobei die andere Gruppe von Parametern weniger Einfluss auf die Aufzeichnungsqualität hat als die in dem Verfahrensschritt (b) getesteten Gruppe von Parametern;
   (e) das Durchführen des Plattenaufzeichnungstests mit den Parametern in der anderen Gruppe entsprechend einem anderen vorbestimmten Testschema mit einem vorbestimmten Bereich von Parameterwerten für jeden Parameter der anderen Gruppe, unter der Bedingung, dass andere Parameter nicht geändert werden; und
   (f) das Schaffen einer weiteren Funktionsbeziehung zwischen jedem Parameter in der anderen Gruppe und der Aufzeichnungsqualität der optischen Platte entsprechend dem Testergebnis, und

   - das Erhalten eines entsprechenden optimalen Parameterwertes für jeden Parameter in der anderen Gruppe, und zwar über die weitere Funktionsbeziehung.

3. Verfahren nach Anspruch 2, wobei der in dem Verfahrensschritt (e) durchgeführte Aufzeichnungstest für eine optische Platte die in dem Verfahrensschritt (c) erhaltenen entsprechenden Parameter benutzt.

4. Verfahren nach Anspruch 1, wobei der Verfahrensschritt (a) Anfangswerte von Parametern der Aufzeichnungsstrategie entsprechend dem Typ der optischen Platte einstellt.

5. Verfahren nach Anspruch 1 oder 4, wobei der Verfahrensschritt (a) Anfangswerte von Parametern der Aufzeichnungsstrategie entsprechend der Geschwindigkeit der Plattenaufzeichnung einstellt.

6. Verfahren nach Anspruch 1 oder 2, wobei der Aufzeichnungstest der optischen Platte auf Basis eines vorbestimmten Wertbereichs jedes Parameters in der Gruppe von Parametern und eines vorbestimmten Testschemas durchgeführt wird, wobei das durchgeführte Testschema eine vorbestimmte Anzahl Male, dass der Test durchgeführt wird, bestimmt.

7. Verfahren nach Anspruch 6, wobei das vorbestimmte Testschema das Testschema des zentralen Kombinationsentwurfsexperimentverfahrens umfasst.

8. Verfahren nach Anspruch 1, wobei die Gruppe von Parametern die Aufzeichnungsleistungsparameter einer optischen Platte umfasst.

9. Verfahren nach Anspruch 1 oder 8, wobei die Gruppe von Parametern die Parameter der Pe (Löschleistung) umfasst.

10. Verfahren nach Anspruch 1 oder 8, wobei die Gruppe von Parametern die Parameter der dPw (Leistungszunahme) umfasst.

11. Verfahren nach Anspruch 1, 2 oder 8, wobei die Gruppe von Parametern die Parameter von Ce (Kühlspalten geradzahliger Merker) und Co (Kühlspalten ungeradzahliger Merker) umfasst.

**12.** Verfahren nach Anspruch 1, 2 oder 8, wobei die Gruppe von Parametern Ttop (die Zeit, verwendet für die Aufzeichnung in dem Anfangssegment von Merkern von 4T bis 14T) und Tlp (die Zeit, verwendet für die Aufzeichnung in dem Endsegment von Merkern von 4T bis 14T) umfasst.

**13.** Verfahren nach Anspruch 1 oder 2, wobei der Aufzeichnungstest für die optische Platte in dem Verfahrensschritt (b) und in dem Verfahrensschritt (e) gleichzeitig mit den Parametern in jeder entsprechenden Gruppe durchgeführt wird.

**14.** Einrichtung (600) zum Bestimmen von Parametern zur Plattenaufzeichnung, wobei die Einrichtung Folgendes umfasst:

- Einstellmittel (610) zum Einstellen von Anfangswerten von Parametern in Bezug auf die Aufzeichnungsstrategie zum Aufzeichnen der optischen Platte,
**dadurch gekennzeichnet, dass** das Gerät Folgendes umfasst:
- Selektionsmittel (620) zum Selektieren einer Gruppe der Parameter, wobei die Parameter in der Gruppe eine bestimmte Relevanz unter einander haben und gemeinsam die Aufzeichnungsqualität beeinflussen;
- Testmittel (630) zum Durchführen eines Aufzeichnungstests mit der Gruppe der Parameter entsprechend einem vorbestimmten Testschema mit einem vorbestimmten Bereich von Parameterwerten für jeden Parameter der selektierten Gruppe unter der Bedingung, dass andere Parameter nicht geändert werden; und
- Anpassungsmittel (640) zum Anpassen einer Funktionsbeziehung zwischen jedem Parameter in der Gruppe und der Aufzeichnungsqualität der optischen Platte entsprechend dem Testergebnis, und zum Erhalten eines entsprechenden optimalen Parameterwertes für jeden Parameter in der Gruppe, und zwar über die Funktionsbeziehung.

**15.** Einrichtung nach Anspruch 14, wobei die Einstellmittel Anfangswerte der Parameter der Aufzeichnungsstrategie entsprechend dem Typ der optischen Platte und der Geschwindigkeit der Plattenaufzeichnung einstellen.

**16.** Einrichtung nach Anspruch 14, wobei der Aufzeichnungstest der optischen Platte auf Basis eines vorbestimmten Wertbereichs jedes Parameters in der Gruppe von Parametern und eines vorbestimmten Testschemas durchgeführt wird, wobei das vorbestimmte Testschema eine vorbestimmte Anzahl Male, dass der Test durchgeführt wird, bestimmt.

**17.** Einrichtung nach Anspruch 16, wobei das vorbestimmte Testschema das Testschema des zentralen Kombinationsentwurfsexperimentverfahrens umfasst.

**18.** Einrichtung nach einem der Ansprüche 14 bis 17, wobei die Einrichtung Folgendes umfasst:

- Plattenantriebsmittel zum Antreiben einer zu beschreibenden Platte.

**Revendications**

**1.** Procédé de détermination de paramètres pour l'enregistrement d'un disque optique, comprenant les étapes suivantes consistant à :

(a) régler les valeurs initiales des paramètres de stratégie d'enregistrement pour enregistrer le disque optique ;
**caractérisé en ce que** le procédé comprend :

la sélection d'un groupe de paramètres, les paramètres dans le groupe ayant une pertinence spécifique entre eux et affectant généralement la qualité d'enregistrement ;

(b) exécuter un essai d'enregistrement avec le groupe de paramètres selon un schéma d'essai prédéterminé ayant une gamme prédéterminée de valeurs de paramètre pour chaque paramètre du groupe sélectionné sous la condition que les autres paramètres restent inchangés ; et
(c) fixer une relation de fonction entre chaque paramètre dans le groupe et la qualité d'enregistrement du disque optique selon le résultat de l'essai, et

l'obtention, par le biais de la relation de fonction, d'une valeur de paramètre optimale correspondante pour chaque paramètre dans le groupe.

2. Procédé selon la revendication 1, comprenant encore les étapes suivantes consistant à :

(d) sélectionner un autre groupe de paramètres à partir des paramètres, les paramètres de l'autre groupe ayant une pertinence spécifique entre eux et affectant généralement la qualité d'enregistrement, l'autre groupe de paramètres ayant moins d'influence sur la qualité d'enregistrement que le groupe de paramètres qui est essayé dans l'étape (b) ;
(e) exécuter un essai d'enregistrement du disque avec les paramètres dans l'autre groupe selon un autre schéma d'essai prédéterminé ayant une gamme prédéterminée de valeurs de paramètre pour chaque paramètre de l'autre groupe sous la condition que les autres paramètres restent inchangés ; et
(f) fixer une nouvelle autre relation de fonction entre chaque paramètre dans l'autre groupe et une qualité d'enregistrement du disque optique selon le résultat de l'essai, et
l'obtention, par le biais de la nouvelle autre relation de fonction, d'une valeur de paramètre optimale correspondante pour chaque paramètre dans l'autre groupe.

3. Procédé selon la revendication 2, dans lequel l'essai d'enregistrement du disque optique qui est exécuté dans l'étape (e) utilise les paramètres correspondants qui sont obtenus dans l'étape (c).

4. Procédé selon la revendication 1, dans lequel l'étape (a) règle les valeurs initiales des paramètres de stratégie d'enregistrement selon le type du disque optique.

5. Procédé selon la revendication 1 ou selon la revendication 4, dans lequel l'étape (a) règle les valeurs initiales des paramètres de stratégie d'enregistrement selon la vitesse d'enregistrement du disque.

6. Procédé selon a revendication 1 ou selon la revendication 2, dans lequel l'essai d'enregistrement du disque optique est exécuté sur la base d'une gamme de valeurs prédéterminée de chaque paramètre dans le groupe de paramètres et d'un schéma d'essai prédéterminé, dans lequel le schéma d'essai prédéterminé détermine un nombre prédéterminé de temps d'essai.

7. Procédé selon la revendication 6, dans lequel le schéma d'essai prédéterminé inclut le schéma d'essai du procédé d'expérience de conception de combinaison de centre.

8. Procédé selon la revendication 1, dans lequel le groupe de paramètres inclut les paramètres de puissance d'enregistrement du disque optique.

9. Procédé selon la revendication 1 ou selon la revendication 8, dans lequel le groupe de paramètres inclut les paramètres de Pe (puissance d'effacement).

10. Procédé selon la revendication 1 ou selon la revendication 8, dans lequel le groupe de paramètres inclut les paramètres de dPw (incrémentation de puissance).

11. Procédé selon les revendications 1, 2 ou 8, dans lequel le groupe de paramètres inclut les paramètres de Ce (fentes de refroidissement de marques paires) et de Co (fentes de refroidissement de marques impaires).

12. Procédé selon les revendications 1, 2 ou 8, dans lequel le groupe de paramètres inclut Ttop (le temps qui s'écoule à l'enregistrement dans le segment de début de marques à partir de 4T jusqu'à 14T) et Tip (le temps qui s'écoule à l'enregistrement dans le segment de fin de marques à partir de 4T jusqu'à 14T).

13. Procédé selon la revendication 1 ou selon la revendication 2, dans lequel l'essai d'enregistrement du disque optique dans l'étape (b) et dans l'étape (e) est exécuté simultanément avec les paramètres dans chaque groupe correspondant.

14. Appareil (600) de détermination de paramètres pour l'enregistrement du disque, comprenant :

des moyens de réglage (610) pour régler les valeurs initiales des paramètres de stratégie d'enregistrement pour l'enregistrement du disque optique ;

**caractérisé en ce que** le dispositif comprend des moyens de sélection (620) pour :

sélectionner un groupe de paramètres, les paramètres dans le groupe ayant une pertinence spécifique entre eux et affectant généralement la qualité d'enregistrement ; des moyens d'essai (630) pour exécuter un essai d'enregistrement avec le groupe de paramètres selon un schéma d'essai prédéterminé ayant une gamme prédéterminée de valeurs de paramètre pour chaque paramètre du groupe sélectionné sous la condition que les autres paramètres restent inchangés ; et

des moyens de fixation (640) pour fixer une relation de fonction entre chaque paramètre dans le groupe et la qualité d'enregistrement du disque optique selon le résultat de l'essai, et l'obtention, par le biais de la relation de fonction, d'une valeur de paramètre optimale correspondante pour chaque paramètre dans le groupe.

15. Appareil selon la revendication 14, dans lequel les moyens de réglage règlent les valeurs initiales des paramètres de stratégie d'enregistrement selon le type du disque optique et selon la vitesse d'enregistrement du disque.

16. Appareil selon la revendication 14, dans lequel l'essai d'enregistrement du disque optique est exécuté sur la base d'une gamme de valeurs prédéterminée de chaque paramètre dans le groupe de paramètres et d'un schéma d'essai prédéterminé, dans lequel le schéma d'essai prédéterminé détermine un nombre prédéterminé de temps d'essai.

17. Appareil selon la revendication 16, dans lequel le schéma d'essai prédéterminé inclut le schéma d'essai du procédé d'expérience de conception de combinaison de centre.

18. Appareil selon l'une quelconque des revendications précédentes 14 à 17, comprenant :

des moyens d'entraînement du disque pour entraîner un disque à écrire.

```
                          ┌─────────────┐
                          │    Start    │
                          └─────────────┘
                                 │
                                 ▼
S110                    ╱───────────────────╲
          No          ╱  determine whether    ╲
    ┌────────────────  there is recording      ╲
    │                 ╲ information pre-stored   ╱
    │                  ╲   on the disc?         ╱
    │                   ╲───────────────────╱
    │                          │ Yes
    │                          ▼
    │   S120      ┌──────────────────────────────┐
    │        ─────│ perform recording test on    │
    │             │          the disc            │
    │             └──────────────────────────────┘
    │                          │
    │         S130             ▼
    │                   ╱───────────────────╲
    │                  ╱ whether the recording╲
    │                 ╱ quality meets the       ╲            Y
    │                 ╲ pre-setting disk          ╱ ───────────┐
    │                  ╲ recording quality?      ╱             │
    │                   ╲───────────────────╱                 │
    │                          │ N                            │
    └──────────────────────────┤                             │
                               ▼                             │
    S140         ┌──────────────────────────────┐            │
         ────────│ set initial disc recording   │            │
                 │          parameters          │            │
                 └──────────────────────────────┘            │
                               │                             │
                               ▼                             │
    S150         ┌──────────────────────────────┐            │
         ────────│ select a group of parameters │            │
                 │ that have specific relevancy │            │
                 │       with each other        │            │
                 └──────────────────────────────┘            │
                               │                             │
                               ▼                             │
    S160         ┌──────────────────────────────┐            │
         ────────│ perform disc write test for  │            │
                 │ each parameter of selected   │            │
                 │          groups              │            │
                 └──────────────────────────────┘            │
                               │                             │
                               ▼                             │
    S170         ┌──────────────────────────────┐            │
         ────────│ determine the relationship   │            │
                 │ between the recording quality│            │
                 │ and each parameter to obtain │            │
                 │        optimal value         │            │
                 └──────────────────────────────┘            │
                               │                             │
                               ▼                             │
                          ┌─────────────┐                    │
                          │     End     │◄───────────────────┘
                          └─────────────┘
```

# FIG. 1

FIG. 2

FIG. 3

FIG. 4

EP 1 779 382 B1

EP 1 779 382 B1

600

```
┌─────────────────────────────────────────────────────────────┐
│    610          620          630          640                 │
│  ┌────────┐  ┌──────────┐  ┌─────────┐  ┌────────────┐        │
│  │Setting │→ │Selecting │→ │Testing  │→ │Determining │→  optimized disc writing
│  │Means   │  │Means     │  │Means    │  │Means       │        parameters
│  └────────┘  └──────────┘  └─────────┘  └────────────┘        │
│                                                               │
└─────────────────────────────────────────────────────────────┘
```

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020176338 A